# EUROPÄISCHE PATENTSCHRIFT

(11) **EP 2 957 518 B1**
(45) Veröffentlichungstag und Bekanntmachung des Hinweises auf die Patenterteilung: **09.01.2019**
(21) Anmeldenummer: 14002362.3
(22) Anmeldetag: 09.07.2014
(51) Int. Cl.: B65D 21/08, A22C 17/00

(54) **Behältnis für die Zubereitung und den Transport einer Fleischeinheit eines Drehspießes**
Container for the preparation and transport of a meat unit of a rotating spit
Récipient pour la préparation et le transport d'un morceau de viande d'un tournebroche

(30) Priorität: 21.06.2014 EP 14002133
(43) Veröffentlichungstag der Anmeldung: 23.12.2015
(73) Patentinhaber: Akdemir, Firat, 36199 Rotenburg an der Fulda (DE)
(72) Erfinder: Akdemir, IIyas, 36179 Bebra (DE); Akdemir, Firat, 361799 Rotenburg an der Fulda (DE)
(74) Vertreter: Patentanwälte Walther Hinz Bayer PartGmbB

(56) Entgegenhaltungen:
- WO-A1-2006/126829
- JP-U- H02 108 843
- US-A- 4 973 189
- US-A- 5 862 932
- US-A1- 2011 248 040

## Beschreibung

Die Erfindung betrifft ein Behältnis für die Zubereitung und den Transport einer Fleischeinheit eines 4Drehspießes und Verwendung eines solchen Behältnisses, wobei das Behältnis mehrere übereinander angeordnete und miteinander verbindbare Behältersegmente umfasst.

Eine Fleischeinheit eines Drehspießes besteht aus mehreren Lagen einer bestimmten Fleischsorte, insbesondere Kalbfleisch, Hühnerfleisch oder auch Putenfleisch. Eine solche Fleischeinheit als Drehspieß dreht sich vor einer Heizeinrichtung, wobei in bestimmten zeitlichen Abständen mithilfe eines speziellen Messers nach und nach die äußeren gebräunten Schichten dünn abgeschnitten werden. Die abgeschnittenen Fleischstücke werden als Döner, oder auch als Gyros in Abhängigkeit der verwendeten Fleischsorte bezeichnet, und werden bei einem Döner z. B. in einem aufgeschnittenen Fladenbrot serviert.

Üblicherweise wird für die Herstellung einer solchen Fleischeinheit derart vorgegangen, dass ein Unterteller vorgesehen ist, wobei auf dem Unterteller ein weiterer Teller aus Kunststoff lagert, wobei auf dem unteren Teller ein Rohr angeordnet ist, das von einem Spieß durchdrungen wird. Alsdann werden die einzelnen Fleischschichten über den Spieß und das Rohr geschoben, wobei darauf geachtet wird, dass schlussendlich die Form der Fleischeinheit leicht konisch ist. Nachdem die Fleischeinheit ihre endgültige Größe erreicht hat, wird der Spieß herausgezogen, wobei das Rohr in der Fleischeinheit verbleibt. Alsdann wird die Fleischeinheit mit dem Rohr durch eine Kunststofffolie allseitig ummantelt, sodass das Fleisch im Wesentlichen luftdicht verpackt ist. Im Anschluss daran wird die Fleischeinheit schockgefroren. In gefrorenem Zustand kommt dann die Fleischeinheit in den Handel, das heißt, die Fleischeinheit wird mittels geeigneter Kühlfahrzeuge zu den Abnehmern transportiert. Auch bei den einzelnen Abnehmern erfolgt die Lagerung tiefgekühlt, wobei dann, wenn absehbar ist, dass ein neuer Spieß benötigt wird, zunächst in gefrorenem Zustand versucht wird die Folie, soweit wie möglich, von dem Fleisch abzuziehen. Insbesondere die Folie, die in unmittelbarem Kontakt mit dem Fleisch steht, lässt sich allerdings aufgrund des gefrorenen Zustands des Fleisches nicht so ohne weiteres vom Fleisch abziehen. Üblich ist daher das Fleisch antauen zu lassen, um dann im angetauten Zustand zu versuchen, die Folie abzuziehen. Häufig genug ist es jedoch so, dass die Zeit, die benötigt wird, das Fleisch antauen zu lassen, nicht zur Verfügung steht. Teilweise wird dann so vorgegangen, dass das Fleisch durch den Grill angetaut wird, wobei hierbei natürlich immer die Gefahr besteht, dass die Kunststofffolie mit verbrennt und zumindest in die äußeren Fleischschichten eindringt. Dies betrifft insbesondere den unteren Teil der Fleischeinheit, und zwar insofern, als der Fleischspieß unten auf einem Teller aufliegt. Das heißt, dass dort das Fleisch erst ganz zum Schluss antaut und insofern die Folie erst dann abgezogen werden kann, wenn der Fleischspieß bzw. die Fleischeinheit wieder vom Grill genommen wird.

Zusammengefasst bedeutet dies, dass die Handhabung einer Fleischeinheit eines Kebab- oder Dönerspießes, insbesondere dann, wenn die Fleischeinheit vom gefrorenen Zustand des Fleisches in den Betriebszustand überführt werden soll, sehr aufwendig ist.

Aus dem Stand der Technik sind insofern auch bereits Vorschläge bekannt, wie die Zubereitung und der Transport von derartigen Fleischspießen vereinfacht werden kann. So ist aus der DE 60 2004 007 015 T2 ein konischer Behälter zur Aufnahme von Fleischstücken unterschiedlicher Form und Größe zur Herstellung und zum Transport einer Kebabeinheit bekannt. Die Kebabeinheit weist ein die Kebabeinheit in Längsrichtung der Kebabeinheit durchragendes Rohr auf, durch das ein Spieß steckbar ist. Der Behälter mit der Kebabeinheit wird in einer Schachtel transportiert, wobei die Schachtel selbst Verschlusslaschen aufweist, wobei die innere der Verschlusslaschen eine Öffnung zur Aufnahme des Rohres der Kebabeinheit aufweist, sodass die Kebabeinheit in der Schachtel fixiert ist.

Nachteilig an diesem Behältnis ist, dass aufgrund der Höhe des Behältnisses von etwa 65 cm, die Befüllung des Behältnisses mit den einzelnen Fleischstücken relativ schwierig und aufwendig ist. Es besteht auch immer die Gefahr der Verletzung, da die einzelnen Fleischstücke über den über das Rohr überstehenden Fleischspieß gesteckt werden müssen. Wie sich aus dieser Literaturstelle ergibt, ist eine Schachtel vorgesehen, in der das Behältnis einsitzt, wobei die Schachtel zumindest im oberen Bereich eine Lasche aufweist, die mit einer Öffnung versehen ist, um das Rohr, auf dem die einzelnen Fleischstücke aufsitzen, zu stützen. Nicht erkennbar ist, wie die Fleischeinheit vor dem Schockgefrieren luftdicht verpackt wird. Das heißt, der aus der DE 60 2004 007 015 T2 bekannte konische Behälter dient lediglich der unmittelbaren Herstellung einer Kebabeinheit, die zum unmittelbaren Verbrauch gedacht ist.

Aus der DE 100 43 386 A1 ist ein Gyros- oder Döneraufbaugerät bekannt. Dieses Aufbaugerät umfasst mehrere übereinander angeordnete halbkreisförmige Etagenringe, die jeweils eine Schwenkhülse aufweisen, wobei die Schwenkhülsen der Etagenringe durch eine Schwenkstange miteinander in Verbindung stehen. Die halbkreisförmigen Etagenringe sind an ihrem freien Ende durch eine Klammer verschließbar. Der untere Etagenring sitzt hierbei auf einer Scheibe auf. Eine ähnliche Konstruktion ergibt sich aus der EP 1 462 006 A1. Es sei darauf hingewiesen, dass dieses Döneraufbaugerät lediglich dazu dient, eine Fleischeinheit bestimmter Form und Größe herzustellen. Nach Herstellen der Fleischeinheit, das heißt nach Abnahme der einzelnen Etagenringe des Aufbaugerätes, ist es immer noch erforderlich, dass die Fleischeinheit mit Folie umwickelt wird, bevor die Fleischeinheit schockgefroren wird. Aus WO2006126829 ist ein Behältnis bekannt nach dem Oberbegriff des Anspruchs 1, mit mehrere miteinander verbindbare Behältersegmente.

Die der Erfindung zugrunde liegende Aufgabe besteht demzufolge darin, ein Behältnis für die Zubereitung und den Transport einer Fleischeinheit eines Drehspießes der eingangs genannten Art bereitzustellen, das einfach zu handhaben ist, das eine hygienisch einwandfreie Zubereitung einer Fleischeinheit für einen Drehspieß ermöglicht und unmittelbar den Gebrauch der Fleischeinheit als Drehspieß vor einer Wärmequelle im unaufgetauten Zustand zulässt.

Zur Lösung der Aufgabe wird erfindungsgemäß ein Behältnis gemäß Anspruch 1 und eine Verwendung eines Behältnisses gemäß Anspruch 10 vorgeschlagen. Ein solches in sich geschlossenes Behältersegment kann beispielsweise ein solches sein, dass kreisrund ist. Vorteilhaft sind die Behältersegmente lösbar miteinander verbindbar.

Für die Herstellung einer Fleischeinheit für einen Kebabspieß wird nun derart vorgegangen, dass zunächst das untere Behältersegment mit dem Boden mit Fleisch gefüllt wird. Ist dieses Behältersegment im Wesentlichen vollständig mit Fleisch befüllt, wird ein weiteres Behältersegment in Form eines konischen Ringes auf das erste untere Behältersegment aufgesetzt, und mit diesem unteren Behältersegment in insbesondere lösbare Verbindung gebracht. Sofern auch dieses Behältersegment befüllt ist, kann ein weiteres drittes Behältersegment auf dieses zweite Behältersegment ebenfalls in insbesondere lösbarer Verbindung aufgesetzt werden, um dann schlussendlich auch dieses dritte Behältersegment mit Fleisch zu füllen. Lösbar bedeutet in diesem Zusammenhang, dass die einzelnen Segmente miteinander in eine stabile Verbindung bringbar sind, und vorteilhaft in lösbarer Verbindung stehen, um die Fleischeinheit aus der Form lösen zu können, falls ein Lösen nicht anderweitig, z. B. durch warmes Wasser, möglich ist. Ist die geforderte Höhe der Fleischeinheit erreicht, wird das obere Ende des Behältnisses durch einen Deckel verschlossen. Die Fixierung des Deckels in dem oberen Behältersegment muss derart erfolgen, dass der Deckel fest auf der oberen Fleischschicht aufsitzt, um nach Möglichkeit die Zufuhr von Luft zu verhindern. Denn beim Gefrieren der Fleischeinheit ist es immer so, dass dort, wo das Fleisch freiliegt, mit Gefrierbrand zu rechnen ist. Insofern ist vorgesehen, dass das Behältersegment zur Aufnahme des Deckels auf der Innenmantelfläche mindestens eine Rastung aufweist, durch die der Deckel auf der Innenseite des Behältersegmentes fixierbar ist.

Für den Betrieb der Fleischeinheit als Fleischspieß vor einer Wärmeeinheit ist erforderlich, dass die Fleischeinheit zentrisch ein die Fleischeinheit durchragendes Rohr aufweist. Insofern ist nach einem besonderen Merkmal der Erfindung vorgesehen, dass der Boden des ersten unteren Behältersegmentes im Wesentlichen zentrisch einen abnehmbaren Verschluss aufweist, sodass eine Öffnung freigegeben wird, die im Wesentlichen dem Querschnitt des Rohres entspricht, das die Fleischeinheit und den Boden durchdringt. Der Deckel weist ebenfalls eine durch einen Verschluss verschlossene Öffnung für die Durchführung des Rohres auf. Der Verschluss kann hierbei aus der Öffnung des Deckels herausbrechbar sein. Insofern wird für die Einführung des Rohres in die Fleischeinheit so vorgegangen, dass durch das Rohr zunächst der Spieß gesteckt wird, der über das Rohr vorsteht. Das Rohr selbst stützt sich auf einen am unteren Ende des Spießes angeordneten Teller oder Ähnlichem ab. Nach Abnahme des zentrischen Verschlusses im Boden des unteren Behältersegmentes wird der Spieß einschließlich des Rohres durch die Fleischeinheit geschoben, bis das Rohr aus der entsprechenden Öffnung im Deckel herausragt. Alsdann wird der Spieß aus dem Rohr gezogen. Hierbei kann vorgesehen sein, wie dies bereits zuvor erwähnt worden ist, dass der Verschluss im Boden des unteren Behältnisses vor dem Durchstechen der Fleischeinheit mit dem Rohr und dem Spieß abgenommen ist. Der Verschluss für die Öffnung im Deckel kann herausbrechbar sein. Das heißt, dass durch den Spieß bzw. das Rohr der Verschluss aus dem Deckel bei Durchstoßen des Deckels herausgebrochen wird.

Es wurde bereits darauf hingewiesen, dass die einzelnen Behältersegmente lösbar miteinander in Verbindung stehen. Für eine lösbare Verbindung kann vorgesehen sein, dass die einzelnen Behältersegmente jeweils ein Innen- und Außengewinde aufweisen. In diesem Zusammenhang ist insbesondere vorgesehen, dass das erste untere Behältersegment mit dem Boden am oberen freien Rand ein Außengewinde aufweist und entsprechend das weitere damit verbindbare Behältersegment mit im unteren Bereich ein Innengewinde. Entsprechendes gilt für das dritte Behältersegment. Es besteht aber auch die Möglichkeit, die einzelnen konisch zulaufenden Behältersegmente durch eine Verbindung nach Art eines Bajonettverschlusses miteinander zu verbinden.

Alternativ besteht auch die Möglichkeit einer Schnappverbindung zwischen den einzelnen Behältersegmenten. Das heißt, es befinden sich an den einzelnen Behältersegmenten umfangs verteilt Schnappnasen in dem einen Behältersegment und entsprechende Schnappöffnungen in dem anderen Behältersegment, sodass die Behältersegmente schnappbar untereinander verrastet sind.

Für die Ingebrauchnahme der Kebabeinheit ist insofern vorgesehen, dass im gefrorenen Zustand zunächst das obere Behältersegment abgenommen wird, um dann nach und nach die unteren Behältersegmente abzuziehen. Für den Fall, dass die einzelnen Behältersegmente durch das Gefrieren am Fleisch haften sollten, wird das Lösen der einzelnen Behältersegmente von der Fleischeinheit dadurch erleichtert, dass warmes Wasser über die Behältersegmente, die aus einem lebensmittelechten Kunststoff ausgebildet sind, gegeben wird.

Anhand der Zeichnungen wird die Erfindung nachstehend beispielhaft näher erläutert.

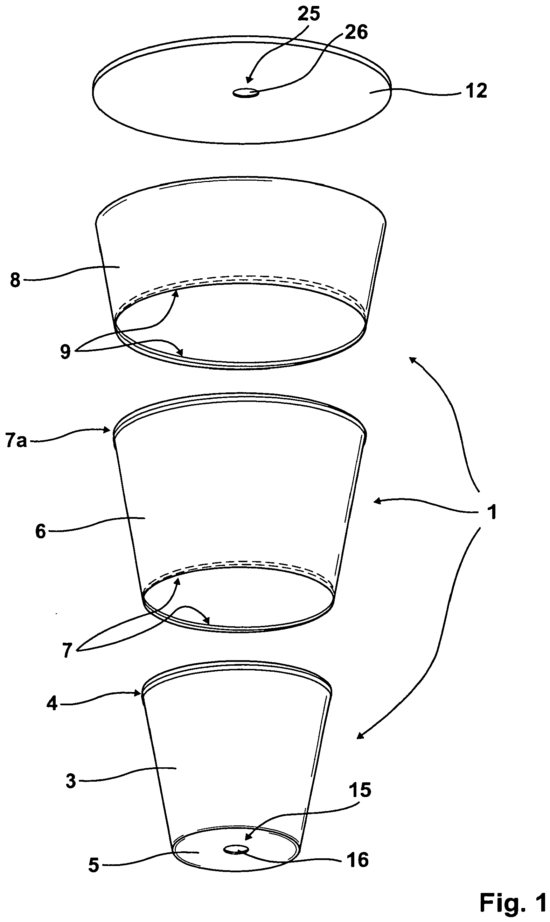

- Figur 1: eine explosionsartige Darstellung des Behälters mit den einzelnen Behältersegmenten und dem Deckel;
- Figur 2: zeigt eine Darstellung gemäß Figur 1, wobei die einzelnen Behältersegmente durch jeweils eine Gewindeverbindung miteinander in Verbindung stehen;
- Figur 3: zeigt schematisch eine Bajonettverbindung zwischen den einzelnen Behältersegmenten;
- Figur 4: zeigt das fertige Behältnis mit zentrisch angeordnetem Rohr und im oberen Behältersegment eingesetztem Deckel;
- Figur 5: zeigt eine Ansicht auf den Boden/Deckel mit einem Verschluss in der Öffnung des Bodens/Deckels;
- Figur 6: zeigt eine Schnappverbindung zwischen den Behältersegmenten.

Das insgesamt mit 1 bezeichnete Behältnis umfasst drei kreisrunde, konisch zulaufende Behältersegmente, nämlich das erste untere Behältersegment 3 mit dem Boden 5, das zweite mittlere Behältersegment 6 und das dritte obere Behältersegment 8. Das dritte obere Behältersegment 8 nimmt den mit 12 bezeichneten Deckel auf.

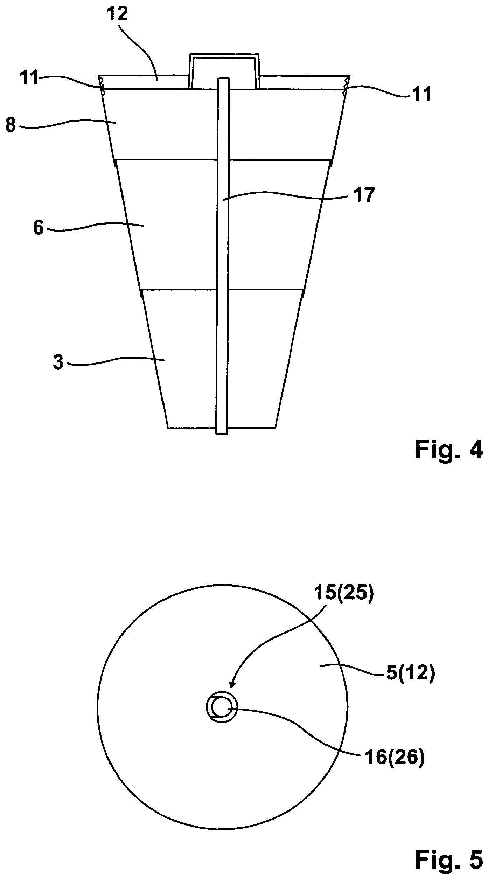

Das erste untere Behältersegment 3 weist ein Außengewinde 4 auf, wobei korrespondierend hierzu das zweite mittlere Behältersegment 6 ein Innengewinde 7 zeigt, das auf das äußere Gewinde 4 des ersten unteren Behältersegmentes 3 aufschraubbar ist. Entsprechend weist das zweite mittlere Behältersegment 6 am oberen Ende ein Außengewinde 7a auf, auf welches das Innengewinde 9 des dritten oberen Behältersegmentes 8 aufschraubbar ist. Der Deckel 12, der als Scheibe ausgebildet ist, ist in das dritte obere Behältersegment 8 eindrückbar. Zur Fixierung des Deckels 12 in dem dritten oberen Behältersegment 8 weist das dritte obere Behältersegment 8, wie sich dies insbesondere aus der Darstellung gemäß Figur 4 ergibt, mehrere umfangsverteilt angeordnete, auf der Innenmantelfläche liegende Rastungen 11 auf, die den Deckel im eingedrückten Zustand fixieren.

Aus der Darstellung gemäß Figur 5 ergibt sich eine Ansicht auf den Boden 5, wobei in dem Boden 5 eine Öffnung 15 vorgesehen ist, deren Querschnitt in etwa dem des Rohres 17 entspricht, das die Fleischeinheit gegebenenfalls über den Boden 5 und den Deckel 12 überstehend durchdringt. Die Öffnung 15 ist durch eine Verschlusslasche 16 verschlossen, die aus der Öffnung 15 herausziehbar ist, wenn das Rohr mit dem darin angeordneten Spieß durch die Fleischeinheit getrieben wird.

Bei dem Deckel 12 ist korrespondierend zu der Öffnung 15 eine Öffnung 25 vorgesehen, die mit einer herausnehmbaren Verschlusslasche 26 versehen sein kann, der aus der Öffnung 25 herausziehbar ist, wie dies bereits in Bezug auf die Öffnung 15 im Boden 5 beschrieben worden ist.

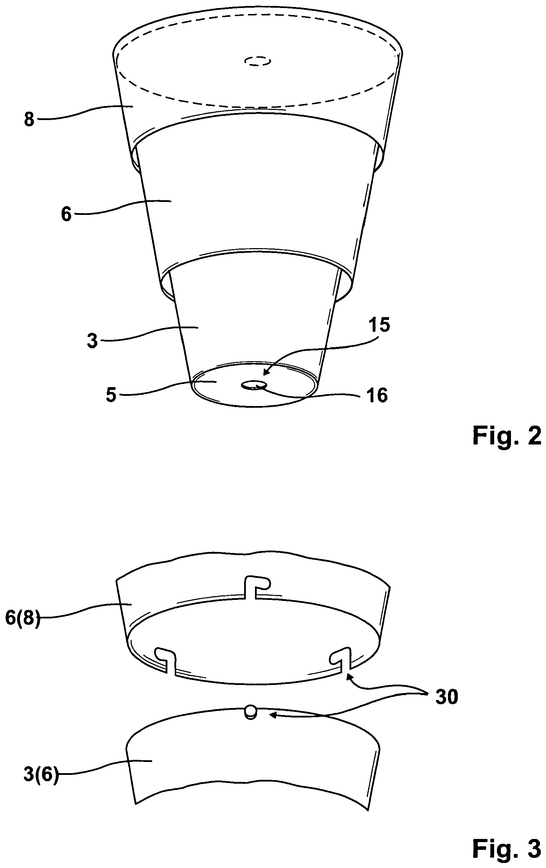

Aus Figur 3 ergibt sich eine Verbindung der Behältnisse 3, 6 und 8 untereinander durch einen Bajonettverschluss. Hierbei zeigt Figur 3 lediglich die entsprechenden Teile der Behältersegmente, die erforderlich sind, um den Bajonettverschluss darstellen zu können.

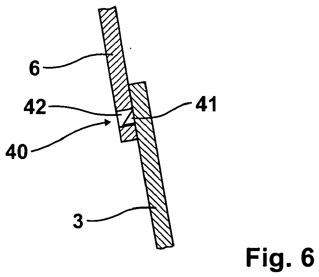

Aus Fig. 6 ergibt sich beispielhaft an zwei Behältersegmenten 3 und 6 eine Schnappverbindung 40. Hierbei sind umfangsverteilt Schnappnasen 41 im Randbereich des jeweiligen Behältersegmentes 3 vorgesehen, wobei korrespondierend das andere Behältersegment 6 Schnappöffnungen 42 aufweist, in der die Schnappnasen einlaufen.

### Bezugszeichenliste:

- 1: Behältnis
- 3: erstes unteres Behältersegment
- 4: Außengewinde
- 5: Boden
- 6: zweites mittleres Behältersegment
- 7: Innengewinde
- 7a: Außengewinde
- 8: drittes oberes Behältersegment
- 9: Innengewinde
- 11: Rastung
- 12: Deckel
- 15: Öffnung (Boden)
- 16: Verschlusslasche (Boden)
- 17: Rohr
- 25: Öffnung (Deckel)
- 26: Verschlusslasche (Deckel)
- 30: Bajonettverschluss
- 40: Schnappverbindung
- 41: Schnappnase
- 42: Schnappöffnung

## Patentansprüche

1. Behältnis (1) für die Zubereitung und den Transport einer Fleischeinheit für einen Drehspieß, wobei das Behältnis (1) mehrere übereinander angeordnete und miteinander verbindbare Behältersegmente umfasst,
wobei mindestens zwei konisch zulaufende, miteinander in Verbindung stehende in sich geschlossene Behältersegmente (3, 6, 8) vorgesehen sind, wobei das erste untere Behältersegment (3) einen Boden (5) aufweist,
**dadurch gekennzeichnet,**
**dass** der Boden (5) des ersten unteren Behältersegmentes (3), im Wesentlichen zentrisch, eine Öffnung und einen abnehmbaren Verschluss (16) aufweist, um die Durchführung eines Rohres zu ermöglichen.

2. Behältnis (1) für die Zubereitung und den Transport einer Fleischeinheit für einen Drehspieß nach Anspruch 1,
**dadurch gekennzeichnet,**
**dass** die einzelnen Behältersegmente (3, 6, 8) in lösbarer Verbindung miteinander stehen.

3. Behältnis (1) für die Zubereitung und den Transport einer Fleischeinheit für einen Drehspieß nach Anspruch 1 oder 2,
**dadurch gekennzeichnet,**
**dass** in das obere Behältersegment (8) ein Deckel (12) eindrückbar ist.

4. Behältnis (1) für die Zubereitung und den Transport einer Fleischeinheit für einen Drehspieß nach Anspruch 3,
**dadurch gekennzeichnet,**
**dass** das Behältersegment (8) zur Aufnahme des Deckels (12) auf der Innenmantelfläche mindestens eine Rastung (11) aufweist.

5. Behältnis (1) für die Zubereitung und den Transport einer Fleischeinheit für einen Drehspieß nach Anspruch 3,
**dadurch gekennzeichnet,**
**dass** der Deckel (12) eine durch eine Verschlusslasche (26) verschlossene Öffnung (25) zur Durchführung eines Rohres aufweist.

6. Behältnis (1) für die Zubereitung und den Transport einer Fleischeinheit für einen Drehspieß nach Anspruch 5,
**dadurch gekennzeichnet,**
**dass** die Verschlusslasche (26) im Deckel (12) aus der Öffnung (25) herausbrechbar ist.

7. Behältnis (1) für die Zubereitung und den Transport einer Fleischeinheit für einen Drehspieß nach einem der vorstehenden Ansprüche,
**dadurch gekennzeichnet,**
**dass** die einzelnen konisch zulaufenden Behältersegmente (3, 6, 8) durch eine Gewindeverbindung (4, 7, 7a, 9) miteinander verbunden sind.

8. Behältnis (1) für die Zubereitung und den Transport einer Fleischeinheit für einen Drehspieß nach einem der voranstehenden Ansprüche 1 bis 6,
**dadurch gekennzeichnet,**
**dass** die einzelnen konisch zulaufenden Behältersegmente (3, 6, 8) durch eine Verbindung nach Art eines Bajonettverschlusses (30) miteinander verbunden sind.

9. Behältnis (1) für die Zubereitung und den Transport einer Fleischeinheit für einen Drehspieß nach Anspruch 1 bis 6,
**dadurch gekennzeichnet,**
**dass** die einzelnen Behältersegmente (3, 6, 8) durch eine Schnappverbindung (40) untereinander verbunden sind.

10. Verwendung eines Behältnisses (1) für die Zubereitung und den Transport einer Fleischeinheit für einen Drehspieß, wobei das Behältnis (1) mehrere übereinander angeordnete und miteinander verbindbare Behältersegmente umfasst, wobei mindestens zwei konisch umlaufende, miteinander in Verbindung stehende in sich geschlossene Behältersegmente (3, 6, 8) vorgesehen sind, wobei das erste untere Behältersegment (3) einen Boden (5) aufweist.

11. Verwendung eines Behältnisses (1) nach Anspruch 10,
**dadurch gekennzeichnet,**
**dass** das Behältnis (1) nach einer oder mehreren der Ansprüche 2 bis 9 ausgebildet ist.

## Claims

1. A container (1) for preparation and transport of a meat unit for a rotating spit, wherein the container (1) comprises several container segments placed one above the other and connectable with each other, wherein at least two conically tapered, self-contained container segments (3, 6, 8) connected with each other are provided, wherein the first lower container segment (3) comprises a bottom (5)
**characterised in**
**that** the bottom (5) of the first lower container segment (3) substantially centrical comprises an opening and a removable closure (16) in order to permit passage of a tube.

2. The container (1) for preparation and transport of a meat unit for a rotating spit according to claim 1,
**characterised in**
**that** the individual container segments (3, 6, 8) are detachably connected with each other.

3. The container (1) for preparation and transport of a meat unit for a rotating spit according to claim 1 or 2,
**characterised in**
**that** a lid (12) can be pressed into the upper container segment (8).

4. The container (1) for preparation and transport of a meat unit for a rotating spit according to claim 3,
**characterised in**
**that** the container segment (8) comprises at least a detent mechanism (11) on the inner face for receiving the lid (12).

5. The container (1) for preparation and transport of a meat unit for a rotating spit according to claim 3,
**characterised in**
**that** the lid (12) comprises an opening (25) closed by a closure tab (26) for passage of a tube.

6. The container (1) for preparation and transport of a meat unit for a rotating spit according to claim 5,
**characterised in**
**that** the closure tab (26) in the lid (12) can be broken out of the opening (25).

7. The container (1) for preparation and transport of a meat unit for a rotating spit according to any one of the preceding claims,
**characterised in**
**that** the individual, conically tapered container segments (3, 6, 8) are connected with each other by means of a threaded connection (4, 7, 7a, 9).

8. The container (1) for preparation and transport of a meat unit for a rotating spit according to any one of the preceding claims 1 to 6 ,
**characterised in**
**that** the individual, conically tapered container segments (3, 6, 8) are connected with each other by means of a connection in the form of a bayonet closure (30).

9. The container (1) for preparation and transport of a meat unit for a rotating spit according to claim 1 to 6,
**characterised in**
**that** the individual container segments (3, 6, 8) are connected with each other by means of a snap connection (40).

10. Use of a container (1) for preparation and transport of a meat unit for a rotating spit, wherein the container (1) comprises several container segments placed one above the other and connectable with each other, wherein at least two conically surrounding, self-contained container segments (3, 6, 8) connected with each other are provided, wherein the first lower container segment (3) comprises a bottom (5).

11. Use of a container (1) according to claim 10,
**characterised in**
**that** the container (1) is formed according to any one or more of claims 2 to 9.

## Revendications

1. Récipient (1) pour la préparation et le transport d'une unité de viande pour un tournebroche, le récipient (1) comportant plusieurs segments de récipient superposés et pouvant être connecté l'un à l'autre,
au moins deux segments de récipient (3, 6, 8) connectés, en forme conique, et fermés en soi étant prévu, le premier segment de récipient (3) inférieur comportant un fond (5),
**caractérisé en ce**
**que** le fond (5) du premier segment de récipient (3) inférieur sensiblement au centre comporte une ouverture et
une fermeture (16) amovible pour permettre le passage d'un tube.

2. Récipient (1) pour la préparation et le transport d'une unité de viande pour un tournebroche selon la revendication 1,
**caractérisé en ce**
**que** les segments individuels de récipient (3, 6, 8) sont reliés de manière amovible.

3. Récipient (1) pour la préparation et le transport d'une unité de viande pour un tournebroche selon la revendication 1 ou 2,
**caractérisé en ce**
**qu'**un couvercle (12) peut être enfoncé dans le segment supérieur de récipient (8).

4. Récipient (1) pour la préparation et le transport d'une unité de viande pour un tournebroche selon la revendication 3,
**caractérisé en ce**
**que** le segment de récipient (8) comprend au moins un crantage (11) sur la face de l'enveloppe intérieure pour recevoir le couvercle (12).

5. Récipient (1) pour la préparation et le transport d'une unité de viande pour un tournebroche selon la revendication 3,
**caractérisé en ce**
**que** le couvercle (12) comprend une ouverture (25) fermée par une languette de fermeture (26) pour le passage d'un tube.

6. Récipient (1) pour la préparation et le transport d'une unité de viande pour un tournebroche selon la revendication 5,
**caractérisé en ce**
**que** la languette de fermeture (26) peut être éclatée de l'ouverture (25) dans le couvercle (12).

7. Récipient (1) pour la préparation et le transport d'une unité de viande pour un tournebroche selon l'une quelconque des revendications précédentes,
**caractérisé en ce**
**que** les segments individuels de récipient (3, 6, 8) en forme conique sont reliés entre eux par un raccord fileté (4, 7, 7a, 9).

8. Récipient (1) pour la préparation et le transport d'une unité de viande pour un tournebroche selon l'une quelconque des revendications précédentes 1 à 6,
**caractérisé en ce**
**que** les segments individuels de récipient (3, 6, 8) en forme conique sont reliés entre eux par une liaison à la manière d'une fermeture à baïonnette.

9. Récipient (1) pour la préparation et le transport d'une unité de viande pour un tournebroche selon la revendication 1 à 6,
**caractérisé en ce**
**que** les segments individuels de récipient (3, 6, 8) sont reliés entre eux par une liaison à encliquetage.

10. Utilisation d'un récipient (1) pour la préparation et le transport d'une unité de viande pour un tournebroche, le récipient (1) comportant plusieurs segments de récipient superposés et pouvant être connecté l'un à l'autre, au moins deux segments de récipient (3, 6, 8) environnants en forme conique, reliés entre eux et fermés en soi étant prévus, le premier segment de récipient (3) inférieur comportant un fond (5).

11. Utilisation d'un récipient (1) selon la revendication 10,
**caractérisé en ce**
**que** le récipient (1) est formé selon l'une ou plusieurs des revendications 2 à 9.
